# EUROPEAN PATENT APPLICATION

(11) **EP 2 719 921 A2**
(43) Date of publication of application: **16.04.2014**
(21) Application number: 13179921.5
(22) Date of filing: 09.08.2013
(51) Int. Cl.: F16G 13/06, B21L 9/00

(54) **Connecting pin for a roller chain**

(30) Priority: 12.10.2012 TW 101219751
(71) Applicant: AMC Chain Industrial Co., Ltd, Tainan City 710 (TW)
(72) Inventor: Wu, Neng-Chia, Tainan City 710 (TW)
(74) Representative: Delorme, Nicolas

(57) **Abstract**

A connecting pin (2) is insertable into a bush member (122) of a roller chain (1) and has a pair of spaced-apart end surfaces (22) extending out of the bush member (122), and a surrounding surface (23) interconnecting the end surfaces (22). The connecting pin (2) further has a plurality of lubricant reservoirs (24) formed in the surrounding surface (23) for reserving lubricant between the bush member (122) and the connecting pin (2). The lubricant reservoirs (24) are spaced apart from each other. Each of the lubricant reservoirs (24) has a closed loop-shaped boundary edge meeting the surrounding surface (23) and is free of fluid communication with the end surfaces (22).

## Description

The invention relates to a connecting pin of a roller chain, more particularly to a connecting pin of a roller chain that has a plurality of lubricant reservoirs formed in a surrounding surface thereof.

A conventional roller chain for a vehicle, such as a bicycle, includes a plurality of inner and outer links that are arranged alternately. Each of the inner links includes a pair of inner plates held together by two bush members. Each of the outer links interconnects an adjacent pair of the inner links, and includes a pair of outer plates held together by two connecting pins. Moreover, each of the bush members is sleeved with a roller member. For each of the outer links, one of the connecting pins interconnected thereby extends rotatably through a bush member of one of the adjacent pair of the inner links, and the other one of the connecting pins interconnected thereby extends rotatably through a bush member of the other one of the adjacent pair of the inner links such that the conventional roller chain is able to bend to engage a sprocket of the vehicle for transmitting mechanical power.

When the conventional roller chain bents, at least one bush members and the corresponding connecting pin extending therethrough rotate relative to each other. A smooth movement between the bush member and the corresponding connecting pin is assisted by lubrication. Since an outer surrounding surface of the corresponding connecting pin is smooth, lubricant can hardly be retained between the bush member and the corresponding connecting pin.

Therefore, the object of the present invention is to provide a connecting pin of a roller chain that has a plurality of lubricant reservoirs formed in a surrounding surface thereof for retaining lubricant.

According to one aspect of the present invention, a connecting pin for the present invention is insertable into a bush member of a roller chain, and comprises:
a pair of end surfaces spaced apart along an axis of the connecting pin and adapted to extend out of the bush member;
a surrounding surface surrounding the axis and interconnecting the end surfaces; and
a plurality of lubricant reservoirs formed in the surrounding surface and indented toward the axis for reserving lubricant between the bush member and the connecting pin, the lubricant reservoirs being spaced apart from each other, each of the lubricant reservoirs having a closed loop-shaped boundary edge that meets the surrounding surface and being free of fluid communication with the end surfaces.

According to another aspect of the present invention, a method for making the connecting pin for a roller chain, comprises the steps of:
(A) preparing a pair of templates that are spaced apart in a first direction and that are movable relative to each other in a second direction perpendicular to the first direction, the templates respectively having contact surfaces that face each other, one of the contact surfaces having a plurality of spaced-apart protrusions;
(B) disposing a cylindrical billet member between the templates, the billet member having a rollable surface adapted to be pressed by the contact surfaces; and
(C) moving the templates relative to each other in the second direction to roll the billet member over the protrusions and to squeeze the protrusions into the rollable surface so that the billet member is formed into the connecting pin that has a plurality of lubricant reservoirs formed by the protrusions in a surrounding surface of the connecting pin.

Other features and advantages of the present invention will become apparent in the following detailed description of the preferred embodiment with reference to the accompanying drawings, of which:
Fig. 1 is a fragmentary, partly-sectional view of a roller chain including two connecting pins according to the preferred embodiment of the invention;
Fig. 2 is a perspective view of the connecting pin;
Fig. 3 is a sectional view of the connecting pin;
Fig. 4 is a flow chart of a method for making a connecting pin according to the preferred embodiment of the invention;
Fig. 5 illustrates parts of the method;
Fig. 6 is a perspective view illustrating a billet member before being formed with lubricant reservoirs by two templates; and
Fig. 7 illustrates a reservoir-forming process of the method.

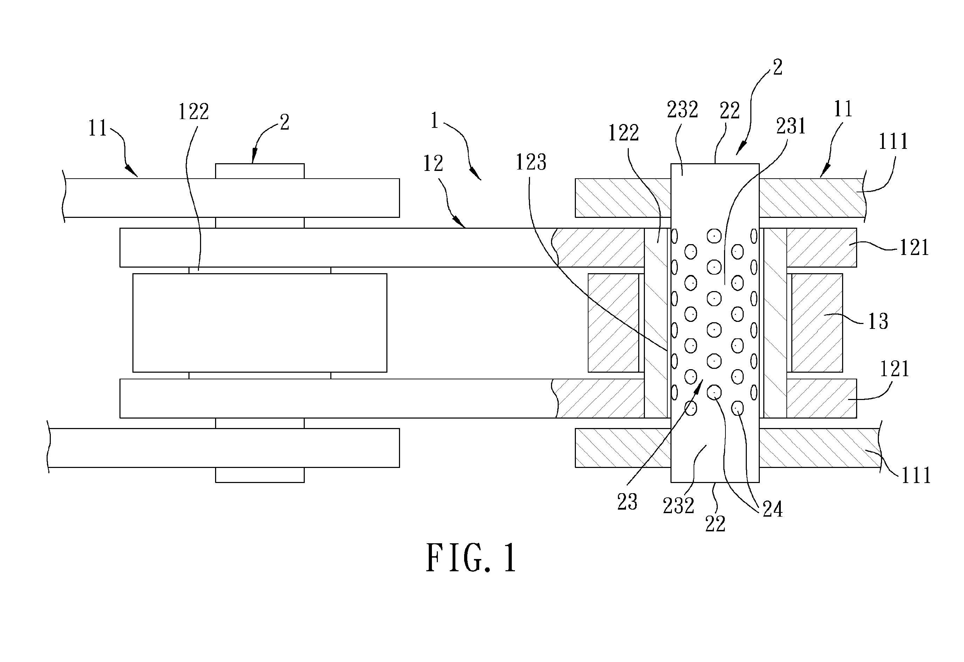

As shown in Fig. 1, a roller chain 1 includes a plurality of inner and outer links 12, 11 that are arranged alternately (only one of the inner links 12 is shown). Each of the outer links 11 includes a pair of outer plates 111 held together by two connecting pins 2 according to the preferred embodiments of the present invention. Each of the inner links 12 interconnects an adjacent pair of the outer links 11, and includes a pair of inner plates 121 held together by two bush members 122. Each of the bush members 122 is surrounded by a roller member 13. For each of the inner links 12, one of the bush members 122 is disposed for rotatable insertion of one of the connecting pins 2 that hold the outer plates 111 of an adjacent one of the outer links 11, and the other one of the bush members 122 is disposed for rotatable insertion of one of the connecting pins 2 that hold the outer plates 111 of another adjacent one of the outer links 11, such that the roller chain 1 is able to bend.

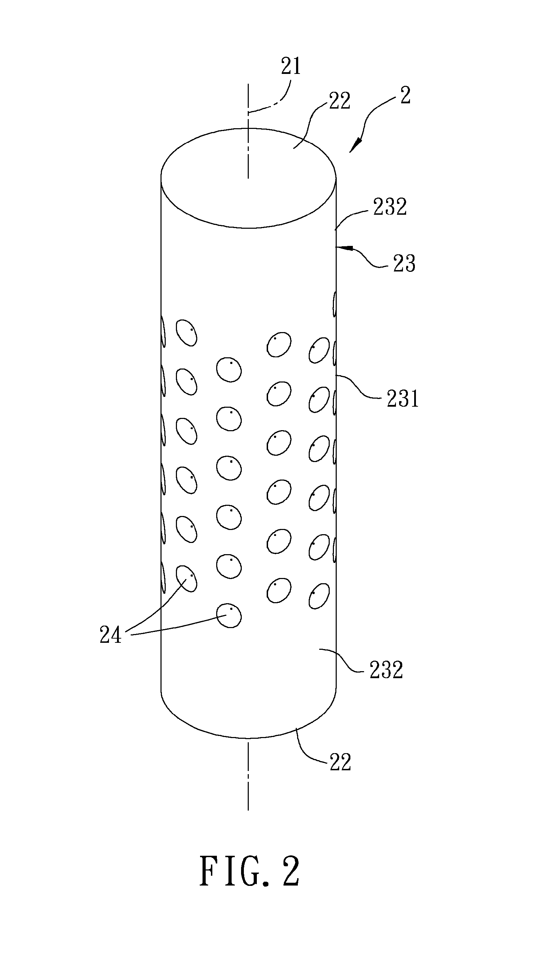

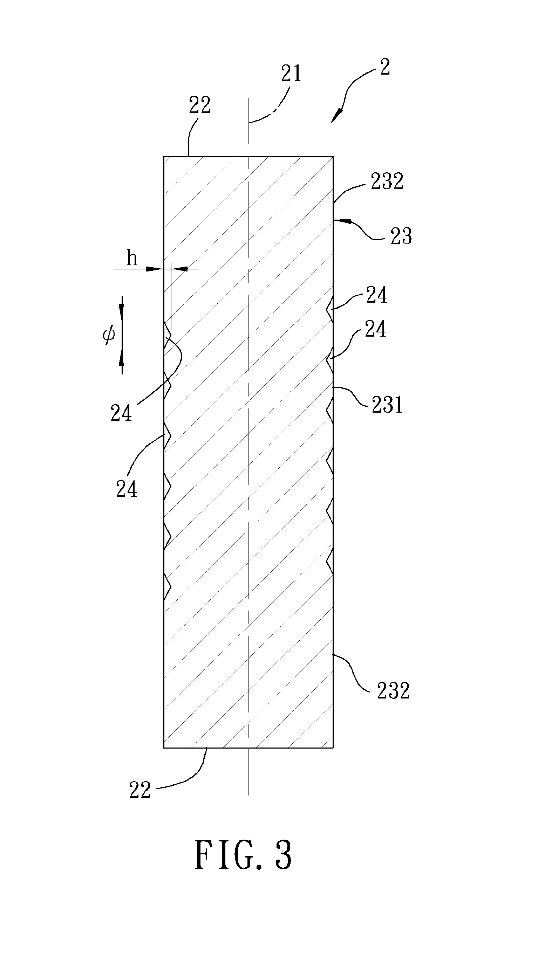

Referring further to Figs. 2 and 3, the connecting pin 2 of the preferred embodiment has a pair of end surfaces 22 spaced apart along an axis 21 and extending out of the corresponding bush member 122 sleeved thereon, a surrounding surface 23 surrounding the axis 21 and interconnecting the end surfaces 22, and a plurality of lubricant reservoirs 24 formed in the surrounding surface 23 and indented toward the axis 21. The surrounding surface 23 has a bushed surface portion 231 for slidable contact with an inner surrounding surface 123 of the corresponding bush member 122, and a pair of lateral surface portions 232 connected respectively to opposite ends of the bushed surface portion 231 along the axis 21 for connection with the corresponding outer plates 111, respectively. The lubricant reservoirs 24 are formed in the bushed surface portion 231 for reserving lubricant between the connecting pin 2 and the corresponding bush member 122.

The number of the lubricant reservoirs 24 ranges from 5 to 220 per 100 square millimeters of the surrounding surface 23, and preferably ranges from 45 to 65 per 100 square millimeters of the surrounding surface 23. When the number of the lubricant reservoirs 24 is less than 5 per 100 square millimeters of the surrounding surface 23, the scale of each of the lubricant reservoirs 24 has to be relatively large for reserving sufficient lubricant. As such, forming such lubricant reservoirs 24 would become difficult and the mechanical strength of the connecting pin 2 is lowered. When the number of the lubricant reservoirs 24 exceeds 220 per 100 square millimeters of the surrounding surface 23, the scale of each of the lubricant reservoirs 24 would become too small to reserve sufficient lubricant.

In this embodiment, the lubricant reservoirs 24 are spaced apart from each other and arranged in a plurality of angularly spaced-apart rows extending along the axis 21. Each adjacent pair of the rows of the lubricant reservoirs 24 are staggered relative to each other. Each of the lubricant reservoirs 24 has a closed loop-shaped boundary edge meeting the surrounding surface 23 and is free of fluid communication with the end surfaces 22. Moreover, each of the lubricant reservoirs 24 is configured as a conical hole that has a maximum width (φ) ranging from 0.5 to 0.9 millimeter and a depth (h) ranging from 0.1 to 0.3 millimeter, and preferably has a maximum width (φ) of 0.7 millimeter and a depth (h) of 0.2 millimeter.

With the lubricant being retained in a space between the connecting pin 2 and the bush member 122 and in the lubricant reservoirs 24, the lubricating effect of the roller chain 1 is improved and the service life of the roller chain 1 is lengthened.

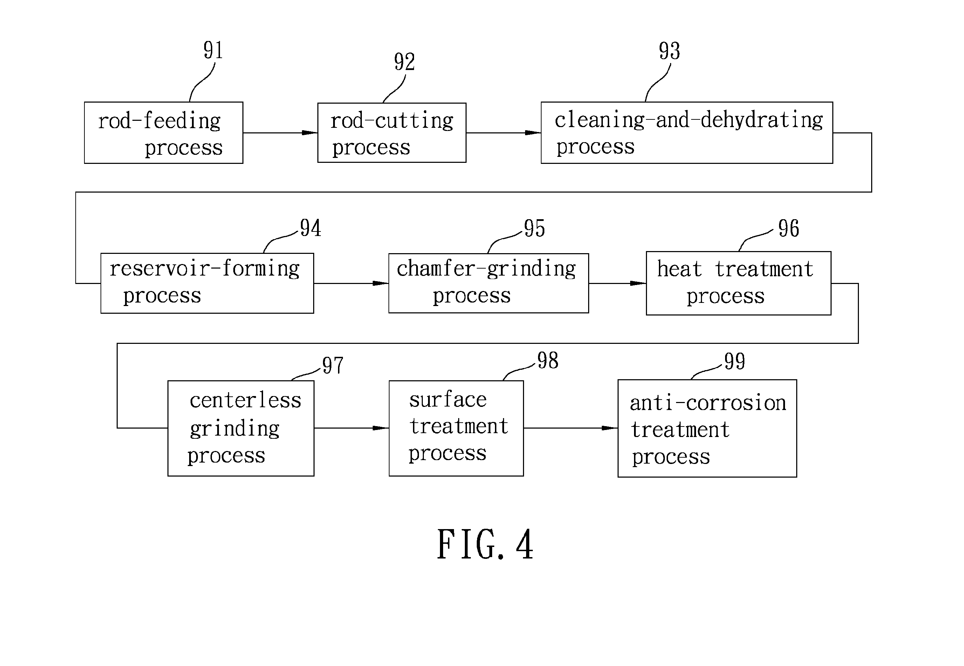

As shown in Fig. 4, a method for making the connecting pin 2 of the preferred embodiment comprises a rod-feeding process 91, a rod-cutting process 92, a cleaning-and-dehydrating process 93, a reservoir-forming process 94, a chamfer-grinding process 95, a heat treatment process 96, a centerless grinding process 97, a surface treatment process 98, and an anti-corrosion treatment process 99.

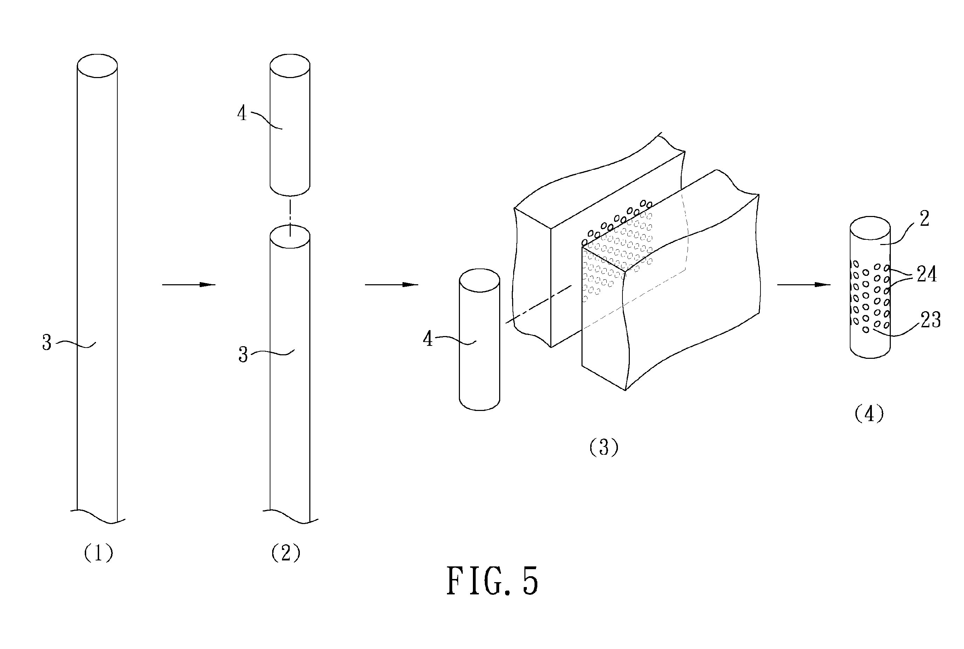

During the rod-feeding process 91, a continuous cylindrical rod member 3 (see Fig. 5 (1)) is fed into a cutting machine (not shown). The rod member 3 may be a linear rod or a stretched wire rod. The rod member 3 is cut into a cylindrical billet member 4 during the rod-cutting process 92 (see Fig. 5 (2)). In this embodiment, the billet member 4 has a diameter of 4.47 millimeters and a length of 16.3 millimeters, but the dimensions may vary in other embodiments of this invention. The cleaning-and-dehydrating process 93 is to remove oil stain on the billet member 4 through the use of a degreasing agent and to dehydrate the billet member 4.

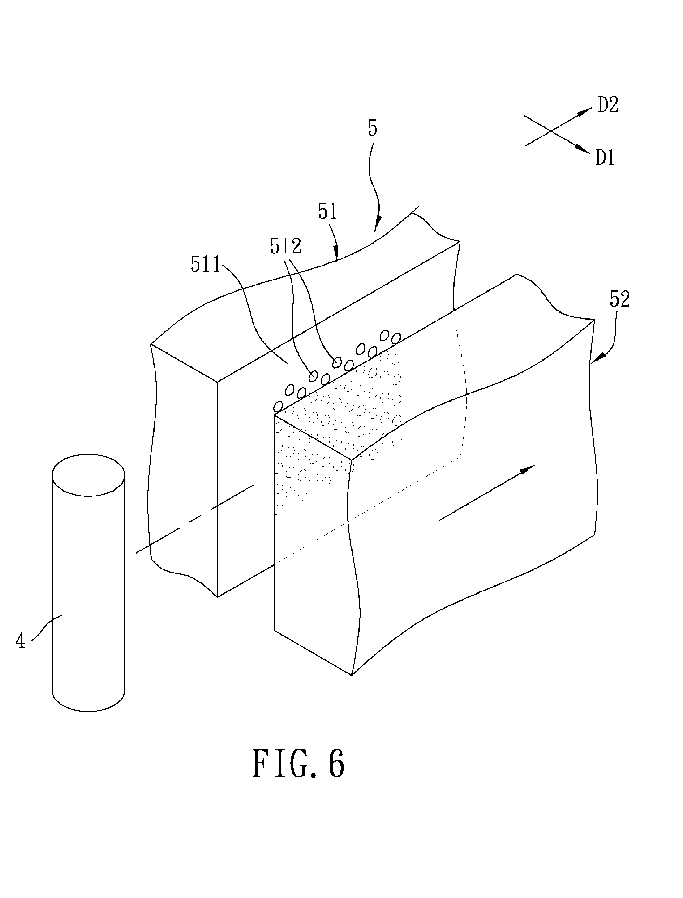

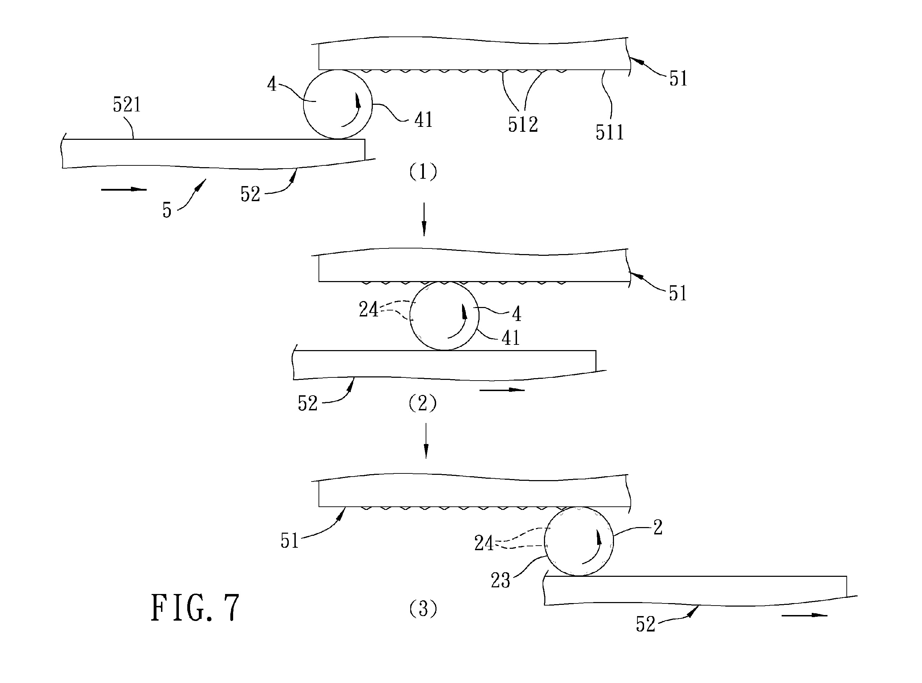

Afterward, referring to Figs. 5 to 7, the reservoir-forming process 94 includes the following steps.
(A) A pair of templates 51, 52 are prepared to be spaced apart in a first direction (D1) (see Fig. 6) and movable relative to each other in a second direction (D2) (see Fig. 6) perpendicular to the first direction (D1). The templates 51, 52 are provided in a rolling machine 5 for mass production and respectively have contact surfaces 511, 521 that face each other. One of the templates 51 is stationary (i.e., the other one of the templates 52 is movable relative thereto) and has the contact surface 511 provided with a plurality of spaced-apart protrusions 512. The hardness of each of the templates 51, 52 is greater than that of the billet member 4.
(B) The billet member 4 is disposed between the templates 51, 52 (see Fig. 7 (1)). The billet member 4 has a rollable surface 41 for being pressed by the contact surfaces 511, 521.
(C) The other one of the templates 52 is moved in the second direction (D2) to roll the billet member 4 over the protrusions 512 of the stationary one of the templates 51 and to squeeze the protrusions 512 into the rollable surface 41 (see Fig. 7 (2), (3)) so that the billet member 4 is formed into the connecting pin 2 that has a plurality of the lubricant reservoirs 24 formed by the protrusions 512 in a surrounding surface 23 of the connecting pin 2 (see Fig. 5 (4)). Since the chamfer-grinding process 95, the heat treatment process 96, the centerless grinding process 97, the surface treatment process 98 and the anti-corrosion treatment process 99 subsequent to the reservoir-forming process 94 are known in the art, further details of the same are omitted herein for the sake of brevity. The abovementioned reservoir-forming process 94 is relatively simple, and would reduce the manufacturing cost of the connecting pin 2 of the present invention.

## Claims

1. A connecting pin (2) for a roller chain (1), which is insertable into a bush member (122) of the roller chain (1), **characterized by**:
a pair of end surfaces (22) spaced apart along an axis (21) of the connecting pin (2) and adapted to extend out of the bush member (122);
a surrounding surface (23) surrounding the axis (21) and interconnecting said end surfaces (22); and
a plurality of lubricant reservoirs (24) formed in said surrounding surface (23) and indented toward the axis (21) for reserving lubricant between the bush member (122) and said connecting pin (2), said lubricant reservoirs (24) being spaced apart from each other, each of said lubricant reservoirs (24) having a closed loop-shaped boundary edge that meets said surrounding surface (23) and being free of fluid communication with said end surfaces (22).

2. The connecting pin (2) as claimed in claim 1, **characterized in that** the number of said lubricant reservoirs (24) ranges from 5 to 220 per 100 square millimeters of said surrounding surface (23).

3. The connecting pin (2) as claimed in claim 2, further **characterized in that** the number of said lubricant reservoirs (24) ranges from 45 to 65 per 100 square millimeters of said surrounding surface (23).

4. The connecting pin (2) as claimed in one of claims 1 to 3, **characterized in that** each of said lubricant reservoirs (24) is configured as a conical hole.

5. The connecting pin (2) as claimed in one of claims 1 to 4, **characterized in that** each lubricant reservoir (24) has a maximum width ranging from 0.5 to 0.9 millimeter and a depth ranging from 0.1 to 0.3 millimeter.

6. The connecting pin (2) as claimed in claim 5, further **characterized in that** each of said lubricant reservoirs (24) has a maximum width of 0.7 millimeter and a depth of 0.2 millimeter.

7. The connecting pin (2) as claimed in one of claims 1 to 6, **characterized in that** said surrounding surface (23) has a bushed surface portion (231) for slidable contact with an inner surrounding surface (123) of the bush member (122), and a pair of lateral surface portions (232) connected respectively to opposite ends of said bushed surface portion (231) along the axis (231), said lubricant reservoirs (24) being formed in said bushed surface portion (231).

8. A method for making a connecting pin (2) for a roller chain (1), **characterized by** the steps of:
(A) preparing a pair of templates (51, 52) that are spaced apart in a first direction (D1) and that are movable relative to each other in a second direction (D2) perpendicular to the first direction (D1), the templates (51, 52) respectively having contact surfaces (511, 521) that face each other, one of the contact surfaces (511, 521) having a plurality of spaced-apart protrusions (512);
(B) disposing a cylindrical billet member (4) between the templates (51, 52), the billet member (4) having a rollable surface (41) adapted to be pressed by the contact surfaces (511, 521); and
(C) moving the templates (51, 52) relative to each other in the second direction (D2) to roll the billet member (4) over the protrusions (512) and to squeeze the protrusions (512) into the rollable surface (41) so that the billet member (4) is formed into the connecting pin (2) that has a plurality of lubricant reservoirs (24) formed by the protrusions (512) in a surrounding surface (23) of the connecting pin (2).

9. The method for making a connecting pin (2) as claimed in claim 8, **characterized in that** one of the templates (51) is stationary and has the contact surface (511) thereof provided with the protrusions (512), and that the other one of the templates (52) is moved to roll the billet member (4) over the stationary one of the templates (51).

10. The method for making a connecting pin (2) as claimed in claim 8 or 9, further **characterized by** the steps of feeding a continuous rod member (3), cutting the rod member (3) into the billet member (4), and cleaning and dehydrating the billet member (4) prior to step (A), and the steps of subjecting the connecting pin (2) to chamfer grinding, heat treatment, centerless grinding, surface treatment and anti-corrosion treatment after step (C).
